# EUROPÄISCHE PATENTSCHRIFT

(11) **EP 3 301 886 B1**
(45) Veröffentlichungstag und Bekanntmachung des Hinweises auf die Patenterteilung: **05.11.2025**
(21) Anmeldenummer: 17193560.4
(22) Anmeldetag: 27.09.2017
(51) Int. Cl.: H04L 67/12, H04L 69/18

(54) **MEHRZWECKGERÄT FÜR EIN KRAFTFAHRZEUG**
MULTI-PURPOSE DEVICE FOR A MOTOR VEHICLE
APPAREIL MULTIUSAGE POUR UN VÉHICULE AUTOMOBILE

(30) Priorität: 30.09.2016 DE 102016219016
(43) Veröffentlichungstag der Anmeldung: 04.04.2018
(73) Patentinhaber: Continental Automotive Technologies GmbH, 30175 Hannover (DE)
(72) Erfinder: Schradi, Stefan, 78052 Villingen-Schwenningen (DE)
(74) Vertreter: Aumovio Corporation

(56) Entgegenhaltungen:
- DE-A1- 102008 048 162
- DE-A1- 102014 116 756
- DE-A1- 19 925 570

## Beschreibung

Die vorliegende Erfindung betrifft ein Mehrzweckmodul für ein Kraftfahrzeug.

Aus der DE 10 2012 215 734 A1 ist eine Transpondereinrichtung für ein Mauterfassungssystem bekannt, das aus einer Mauterfassungseinrichtung und einem weiteren Gerät mit Mobiltelefonfunktion besteht, wobei die zur Funktion der Mauterfassungseinrichtung unerlässlichen Funktionsblöcke zur Positionsbestimmung und zur Datenkommunikation mit einem Mobilfunknetz ausschließlich im Gerät mit Mobiltelefonfunktion angeordnet sind. Mauterfassungseinrichtung und weiteres Gerät sind jeweils mittels einer WLAN-Schnittstelle miteinander verbunden. Darüber hinaus kann das weitere Gerät eine Eingabevorrichtung für die Mauterfassungseinrichtung aufweisen. Das weitere Gerät ist somit ein Mehrzweckmodul.

Als nachteilig ist an diesem bekannten Mehrzweckmodul anzusehen, dass die Positionsbestimmung eines Mobiltelefons oftmals durch andere Funktionalitäten des Mobiltelefons, die höhere Priorität besitzen, beeinträchtigt wird, und bei geringer Ackulaufzeit eventuell automatisch ganz abgeschaltet wird. Auch sind die Positionsdaten je nach verwendeter Implementierung nur begrenzt vertrauenswürdig. Zudem ist die WLAN-Schnittstelle nicht in jedem Fall manipulationssicher.

Aus der DE 10 2008 048 162 A1 ist ein System bekannt, bei dem eine Mauterfassungseinheit einen Tachographen umfasst, und mindestens eine weitere Fahrzeugeinrichtung, und ein weiteres Gerät die Funktionen Positionsbestimmung und Datenkommunikation aufweist. Ein Vorteil dieses bekannten Systems ist, dass möglichst viele Fahrzeugfunktionen in einem Mehrzweckgerät integriert sind. Als nachteilig daran ist allerdings anzusehen, dass der Nutzer dieses Systems darauf festgelegt ist, die durch das Mehrzweckgerät vorgegebenen Funktionen zu nutzen. Will er Funktionen alternativer Anbieter nutzen, so muss er diese zusätzlich in das System integrieren.

Die DE 199 25 570 A1 zeigt ein Kommunikationssystem für ein Fahrzeug mit einer oder mehreren, fahrzeugseitigen Anwendungseinheiten zur Durchführung zugehöriger Anwendungsfunktionen und mit mehreren Funkkommunikationskanälen zur Kommunikation der Anwendungseinheiten mit der Fahrzeugaußenwelt. Das Kommunikationssystem weist eine zentrale Kommunikationsplattformeinheit zur variablen Anbindung der einen oder mehreren Anwendungseinheiten an die mehreren von Kommunikationskanälen auf.

Die DE 10 2014 116 756 A1 offenbart eine Vorrichtung zum Erheben von einer Fahrzeugmaut auf Verkehrswegen für Nutzer mit einer in einem Fahrzeug angeordneten Verarbeitungseinheit. Die Vorrichtung weist Mittel zum Erfassen von Ortsdaten, Mittel zum Speichern von Tarifdaten, Mittel zur Identifizierung des Nutzers des Verkehrsweges, sowie Mittel zum Verarbeiten von Ortsdaten und Tarifdaten auf, sodass eine Mautgebühr bestimmbar ist. Ferner ist die Vorrichtung mit einer Mautzentrale enthaltend eine Recheneinheit und einen Speicher, insbesondere eine zentrale Datenbank zum Abspeichern von Mautgebührdaten und/oder Kartenmaterial und/oder Tarifdaten, sowie mit Mitteln zur Datenübertragung zwischen der Verarbeitungseinheit und der Mautzentrale ausgebildet, wobei die Verarbeitungseinheit zum einen durch ein Mobiltelefon oder ein in dem Fahrzeug integriertes Telematikmodul und zum anderen durch ein Mauterweiterungsmodul gebildet ist. Das Mobiltelefon oder das Telematikmodul weist ein erstes Teilprogramm zur Verarbeitung der für die Bestimmung der Mautgebühr relevanten Daten und/oder zur Ermittlung der Mautgebühr auf, wobei das Mauterweiterungsmodul eine Recheneinheit, einen Speicher und Mittel zum Identifizieren des Nutzers aufweist sowie ein zweites Teilprogramm zur Ermittlung von Hilfsdaten, die die von dem ersten Teilprogramm verarbeiteten Daten verifizieren, zur Ergänzung von zeit- und sicherheitskritischen Funktionen für das erste Teilprogramm und ein Kommunikationsprotokoll für den kryptographisch gesicherten Austausch von Daten zwischen dem ersten Teilprogramm und dem zweiten Teilprogramm aufweist.

Es wird ein demgegenüber verbessertes Mehrzweckmodul und ein Kommunikationsverfahren für Geräte gemäß den Ansprüchen 1 und 3 vorgeschlagen.

Erfindungsgemäß ist vorgesehen, dass das Mehrzweckmodul Funktionsblöcke aufweist, die zur Funktion mindestens zweier Geräte unerlässlich sind. Das Mehrzweckmodul weist weiterhin ein Kommunikationsmodul zur Steuerung einer manipulationssicheren Kommunikation zwischen dem Mehrzweckmodul und zumindest einem ersten Gerät der zumindest zwei Geräte, für dessen Funktion zumindest einer der Funktionsblöcke unerlässlich ist, auf. Dies hat den Vorteil, dass Funktionsblöcke, die für mehrere weitere Geräte, die üblicherweise im Kraftfahrzeug angeordnet sind, unerlässlich sind, nur einmal bereitgestellt werden, und von mehreren Geräten gemeinsam genutzt werden können. Das Kommunikationsmodul gewährleistet, gegebenenfalls in Zusammenarbeit mit einem Sicherheitsmodul, dass die benötigten Funktionsblöcke, wo erforderlich, manipulationssicher mit den zugehörigen Geräten kommunizieren und dass sie zuverlässig und verlässlich zur Verfügung stehen und nicht beispielsweise durch eine Anwendung komplett blockiert werden.

Das erfindungsgemäße Mehrzweckmodul hat ein Kommunikationsmodul, das dazu ausgebildet ist, mit mehreren der Geräte gleichzeitig zu kommunizieren und eingehende Datenpakete in Empfang zu nehmen, und ausgehende Datenpakete prioritätsgesteuert zu senden. Dies hat den Vorteil, dass alle Geräte gleichzeitig oder nahezu gleichzeitig, also ohne auf eine länger andauernde ununterbrochene Datenkommunikation zwischen anderen Geräten und dem Kommunikationsmodul warten zu müssen, Informationen bzw. Anforderungen an das Kommunikationsmodul senden können. Sie erhalten von dort Daten, die je nach Priorität und/oder Wichtigkeit versandt werden. Das Kommunikationsmodul legt die Priorität je nach Dringlichkeit fest.

Alternativ ist vorgesehen, dass das Kommunikationsmodul ausgebildet ist um mit mehreren der Geräte gleichzeitig zu kommunizieren und nach festgelegter Priorität der Geräte Datenpakete von diesen zu empfangen und an diese zu senden. Dies hat den Vorteil, dass das wichtigste Gerät immer zum Zuge kommt, das zweitwichtigste auch nahezu immer, während das unwichtigste Gerät die Kommunikation der wichtigeren nicht blockiert. Das unwichtigste Gerät bekommt nur bei niedrigem Bedarf der anderen wichtigeren Geräte Zeitschlitze zur Datenkommunikationsmöglichkeit zugeteilt. Dies ist im allgemeinen unproblematisch, da die Geräte hoher Priorität oft lange Kommunikationspausen einlegen, und nur kurzzeitig Datenübertragungsbedarf haben, dann aber mit hoher Priorität.

Es ist zumindest eines der Geräte eine Mauterfassungseinheit oder ein digitaler Tachograph.

Es ist einer der Funktionsblöcke des Mehrzweckmoduls ein GNSS-Modul oder ein DSRC-Modul oder ein GSM/xG-Modul, ein WiFi Modul oder ein Bluetooth-Modul oder eine Antenne für eines dieser Module. Dies sind diejenigen Funktionsblöcke, die von den meisten der im vorhergehenden Anspruch genannten Geräte benötigt werden, und daher oftmals mehrfach im Fahrzeug vorhanden sind. Das Mehrzweckmodul weist vorzugsweise zwei oder mehrere dieser Module auf. Werden diese vom Mehrzweckmodul bereitgestellt, so entfallen kostenintensive Doppelausstattungen. Nicht nur Geld sondern auch Bauraum wird eingespart, durch geringere Komplexität wird auch das Fehlerrisiko bei Produktion, Betrieb, Wartung und Reparatur reduziert.

Das Kommunikationsmodul kommuniziert über einen manipulationsgesicherten Kommunikationskanal mit zumindest einem der Geräte, wobei eine Authentifizierung der Kommunikationspartner und/oder eine Verschlüsselung und/oder eine Signierung der Daten erfolgt. Dies hat den Vorteil, dass sicherheitsrelevante Daten, beispielsweise behördlich zu überprüfende Steuerzeiten, Mautstraßennutzungsdaten oder ähnliches, mit der erforderlichen Sicherheit übertragen werden. Sie sind somit manipulationssicher.

Erfindungsgemäß weist das Kommunikationsmodul zumindest einen weiteren manipulationsungesicherten Kommunikationskanal auf. Dies hat den Vorteil, dass auch Geräte, bei denen keine oder niedrigere Sicherheitsanforderungen zu erfüllen sind, an den vom Mehrzweckmodul zur Verfügung gestellten Daten oder Funktionen partizipieren können, ohne dass sie selbst entsprechende Ver- oder Entschlüsselungsfunktionen implementiert haben müssen.

Es ist vorgesehen, Positionsinformationen zyklisch sowohl manipulationsgesichert als auch manipulationsungesichert auszusenden. Positionsinformationen, die regelmäßig von mehreren Geräten benötigt werden, brauchen von diesen nicht einzeln angefordert zu werden. Stattdessen werden sie grundsätzlich in regelmäßigen Abständen gesendet, beispielsweise jede Zehntelsekunde, jede Sekunde, oder alle x Sekunden, wobei x üblicherweise kleiner 100, meist kleiner 10 ist. Unter bestimmten Bedingungen kann x auch größer 100 sein, beispielsweise wenn das Kraftfahrzeug ausgeschaltet ist, in einer Parksituation, oder wenn aus sonstigen Gründen nur selten Positionsinformationen benötigt werden. Die regelmäßigen Abstände können auch anlassbezogen sein. Die Positionsinformationen werden dann in unterschiedlichen zeitlichen Abständen gesendet. Ein Anlass ist beispielsweise eine Positionsänderung von mehr als 10 m/s, das Laufen des Fahrzeugmotors, der Aufenthalt des Mehrzweckmoduls in einer bestimmten geographischen Region, oder ähnliches. Dies hat einen reduzierten Datenverkehr zur Folge, da keine Einzelanfragen jedes Geräts erforderlich sind. Die ungesicherte Aussendung stellt sicher, dass auch Geräte, die keinen höheren Anforderungen an Sicherheit und Manipulationssicherheit genügen müssen, mit Navigationsdaten versorgt werden. Anstatt Positionsinformationen werden sinnvollerweise auch andere Informationen auf diese Weise geschickt, wenn für diese Informationen mehrere Geräte als regelmäßige Nutzer vorhanden sind, und Datenverkehr für jeweilige Einzelanfragen reduziert werden soll. Dies ist beispielsweise der Fall bei Daten zu Fahrzeuggeschwindigkeit, zu Straßenverkehrsdaten, bei Gefahrenwarnungen oder ähnlichem.

Ein nicht von der Erfindung umfasstes Gerät für ein Kraftfahrzeug weist eine Kommunikationseinheit zur Kommunikation mit einem Mehrzweckmodul der vorhergehenden Ansprüche auf. Es ist dazu ausgebildet, für zumindest eine für das Gerät unerlässliche Funktion auf das Mehrzweckmodul zuzugreifen. Der Zugriff kann sowohl ein aktives Abfragen sein, als auch ein Auslesen/Empfangen von vom Mehrzweckmodul ausgesandten Informationen. Das Gerät ist ein üblicherweise in Kraftfahrzeugen und/oder Nutzfahrzeugen vorhandenes Gerät, wie ein Navigationsgerät, ein E-Call-Modul, eine Mauterfassungseinheit, ein digitaler Tachograph, ein Telematikgerät oder ein elektronisches Logbuch, oder andere, bei denen zumindest eine unerlässlich Funktion im Hinblick auf Ökonomie sinnvollerweise ausgelagert werden kann. Die Kommunikationseinheit dient zur An- und Abmeldung am Mehrzweckmodul, zum Kommunikationsaufbau, und zur Kommunikationsaufrechterhaltung mit dem Mehrzweckmodul, zur Ver- und Entschlüsselung, falls Daten verschlüsselt oder gesichert übertragen werden, und zum Einhalten der dem Gerät zugewiesenen Prioritätsstufe. Ein derartiges Gerät hat die weiter oben beschriebenen Vorteile.

Ein erfindungsgemäßes Mehrzweckmodul oder Gerät ist dazu ausgebildet, Prioritätsänderungen abgestimmt vorzunehmen. Dies hat den Vorteil, dass ein Gerät welches nur unter bestimmten Randbedingungen eine hohe Priorität benötigt, diese bei Vorliegen dieser Randbedingungen zugeteilt bekommt, während es ansonsten eine niedrigere Prioritätsstufe zugewiesen bekommt und somit die Kommunikation der anderen Geräte nicht unnötig beeinträchtigt. Ein E-Call-Modul bekommt beispielsweise eine hohe Priorität wenn ein Unfall oder eine Unfallgefahr detektiert wurde. Eine Mauterfassungseinheit wird auf niedrige Priorität gesetzt, wenn sich das Fahrzeug außerhalb des Gebiets des entsprechenden Mautbetreibers befindet, etwa im Ausland. Bei Vorliegen einer DSRC-Verbindung oder einer WLAN-Verbindung bekommen Geräte, die ausschließlich oder im wesentlichen über diese Verbindung mit Drittgeräten kommunizieren eine höhere Priorität, um die Zeit, während der die entsprechende Verbindung besteht, zum Datensenden beziehungsweise -empfangen zu nutzen.

Ein erfindungsgemäßes Verfahren zur Kommunikation eines Mehrzweckmoduls mit diesem zusammenarbeitenden Geräten weist die Merkmale des Anspruchs 3 auf. Dies hat die oben zu den Geräteansprüchen beschriebenen Vorteile.

Weitere Vorteile, Ausgestaltungen und Varianten der Erfindung sind auch der folgenden Beschreibung von Ausführungsbeispielen anhand der Figuren entnehmbar. Dabei zeigen:
- Fig. 1: Mauterfassungseinheit und digitaler Tachograph als separate Geräte,
- Fig. 2: erfindungsgemäßes Mehrzweckmodul mit mehreren Geräten,
- Fig. 3: Anordnung eines erfindungsgemäßen Mehrzweckmoduls in einem Fahrzeug,
- Fig. 4: Anordnung eines erfindungsgemäßen Mehrzweckmoduls an einem Fahrzeug,
- Fig. 5: Flussdiagramm eines erfindungsgemäßen Verfahrens.

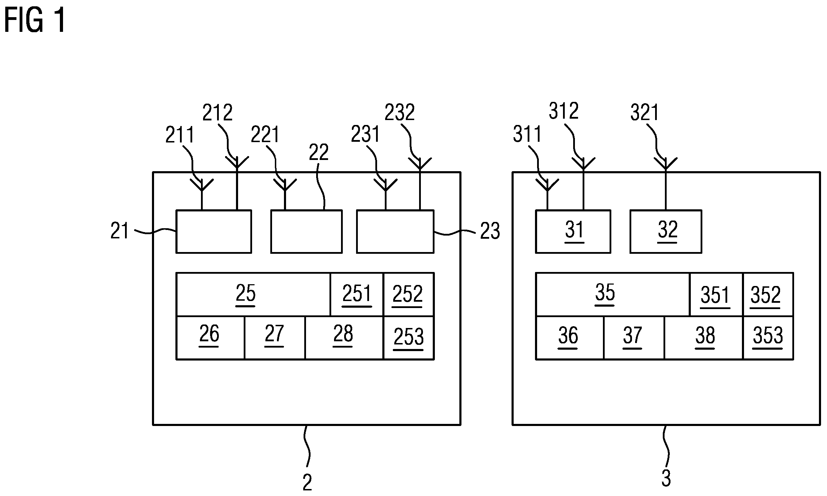

Fig. 1 zeigt eine Mauterfassungseinheit 2 und einen digitalen Tachographen 3. Die Mauterfassungseinheit 2 weist ein GNSS-Modul 21 auf. GNSS steht für Globales-Navigations-Satelliten-System, Beispiele sind das GPS (Global Positioning System), Glonass oder das zukünftige europäische Galileo System. Das GNSS-Modul 21 weist eine erste Antenne 211 und eine zweite Antenne 212 auf. Die Mauterfassungseinheit 2 weist weiterhin ein DSRC-Modul 22 auf. DSRC steht für den englischen Begriff "Dedicated Short Range Communication", ein Kommunikationsverfahren über elektromagnetischen Wellen die nur eine kurze Reichweite haben. Es wird beispielsweise bei einer Frequenz von 5,8 GHz betrieben. Das DSRC-Modul 22 weist eine Antenne 221 auf. Die Mauterfassungseinheit 2 weist weiterhin ein GSM/xG-Modul 23 auf. Hierbei handelt es sich um ein Mobilfunk-Modul der x-ten Generation, welches hauptsächlich zur Datenübertragung aber auch zum Aufbau von Sprachverbindungen genutzt wird. Auch das GSM/xG-Modul 23 weist Antennen 231, 232 auf.

Die Mauterfassungseinheit 2 weist weiterhin einen Mikrocomputer 25 zur Durchführung der Maut-Anwendung auf, einen RAM-Speicher 251 und einen Flash-Speicher 252 und eine HMI-Nutzerschnittstelle 253. RAM steht für "Random Access Memory", mit HMI ist eine Mensch-Maschine-Schnittstelle bezeichnet. Der Begriff "Flash Speicher" steht hier beispielhaft für einen nichtflüchtigen Speicher. Ein entsprechender nichtflüchtiger Speicher ist auch auf anderen Technologien basierend realisierbar. Weiterhin ist eine Sicherheitseinheit 26 vorhanden, eine Energieversorgung 27 und eine Schnittstelle 28. Die Funktionsweise der Mauterfassungseinheit 2 ist dem Fachmann bekannt und wird im Folgenden nur insoweit beschrieben, als sie für die Erfindung bedeutsam ist.

Der digitale Tachograph 3 weist ein GNSS-Modul 31 auf, welches mit Antennen 311, 312 versehen ist. Der digitale Tachograph 3 weist weiterhin ein DSRC-Modul 32 auf, welches eine Antenne 321 aufweist. Das GNSS-Modul 31 hat die gleiche Funktion wie das GNSS-Modul 21 der Mauterfassungseinheit 2 und ist weitgehend gleich aufgebaut. Ebenso hat das DSRC-Modul 32 des digitalen Tachographen 3 die gleiche Funktion wie das DSRC-Modul 22 der Mauterfassungseinheit 2 und ist weitgehend gleich aufgebaut.

Der digitale Tachograph 3 weist einen Mikrocomputer 35 auf, auf dem die Tachographen Anwendung ausgeführt wird. Es ist weiterhin ein RAM-Speicher 351 und ein Flash Speicher 352 sowie eine HMI-Nutzerschnittstelle 353 vorgesehen. Auch auf den Bedarf des digitalen Tachographen 3 abgestimmte Sicherheitseinheit 36, Energieversorgung 37 und Schnittstelle 38 sind vorhanden. Die Funktionsweise eines digitalen Tachographen 3 ist dem Fachmann bekannt und wird im Folgenden nur insoweit erläutert, als sie für die Erfindung relevant ist.

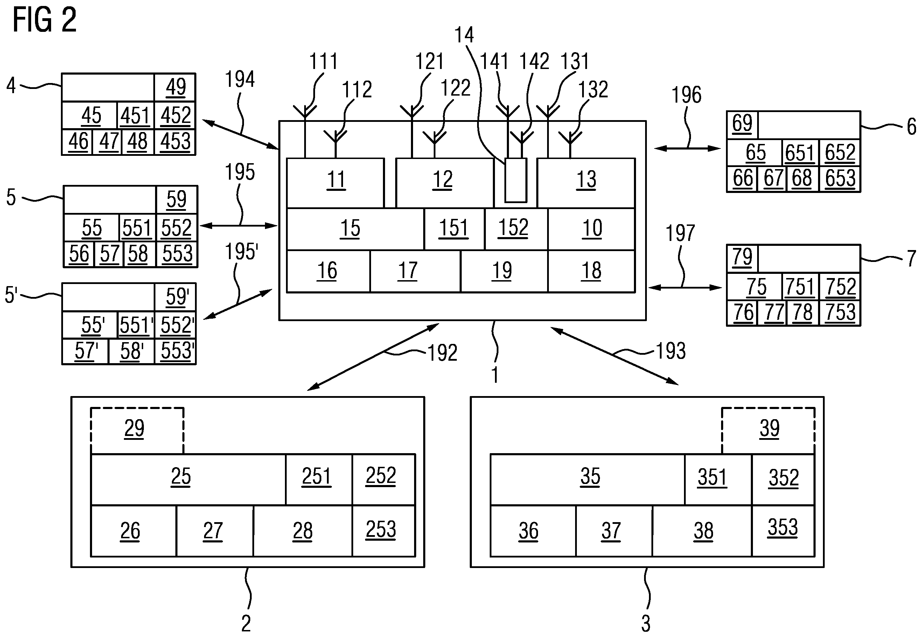

Fig. 2 zeigt ein Mehrzweckmodul 1, eine Mauterfassungseinheit 2, einen digitalen Tachographen 3, ein Telematikgerät 4, ein Navigationsgerät 5, ein E-Call-Modul 6 und ein elektronisches Logbuch 7. Das Mehrzweckmodul 1 weist ein GNSS-Modul 11 auf, welches mit Antennen 111, 112 versehen ist. Das Mehrzweckmodul 1 weist weiterhin ein DSRC-Modul 12 auf, welches Antennen 121, 122 aufweist. Auch ein GSM/xG-Modul 13 mit Antennen 131, 132 ist vorhanden. Außerdem weist das Mehrzweckmodul 1 ein WiFi-Modul 14 mit Antennen 141, 142 auf.

Das Mehrzweckmodul 1 weist einen Mikrocomputer 15 zum Ausführen einer Kommunikationsmanager-Anwendung auf, einen RAM-Speicher 151 und einen Flash Speicher 152. Es weist weiterhin eine Sicherheitseinheit 16 auf sowie eine Energieversorgung 17 auf. Ein Kommunikationsmodul 19 stellt eine drahtlose oder auch eine drahtgebundene Kommunikationsverbindung mit den anderen Geräten 2, 3, 4, 5, 6, 7 her. Kommunikationskanäle 192, 193, 194, 195, 196, 197 sind mittels Doppelpfeilen angedeutet. Das Mehrzweckmodul 1 hat weiterhin eine Schnittstelle 18 und einen Sensor 10, der optional ist, und weiter unten näher erläutert wird.

Die Mauterfassungseinheit 2 weist einen Mikrocomputer 25, einen RAM-Speicher 251, einen Flash-Speicher 252, eine HMI-Nutzerschnittstelle 253, eine Sicherheitseinheit 26, eine Energieversorgung 27 und eine Schnittstelle 28, wie zu Fig. 1 beschrieben auf. Im Gegensatz zu Fig. 1 weist die Mauterfassungseinheit 2 der Fig. 2 kein GNSS-Modul, kein DSRC-Modul und kein GSM/xG-Modul auf. Sie weist dafür eine Kommunikationseinheit 29 auf, mittels der sie über den Kommunikationskanal 192 und das Kommunikationsmodul 19 auf das GNSS-Modul 11, das DSRC-Modul 12 und das GSM/xG-Modul 13 des Mehrzweckmoduls 1 zugreift.

Auch der digitale Tachograph 3 weist einen Mikrocomputer 35 auf, einen RAM-Speicher 351, einen Flash Speicher 352, eine HMI-Nutzerschnittstelle 353, eine Sicherheitseinheit 36, eine Energieversorgung 37 und eine Schnittstelle 38. Zusätzlich weist der digitale Tachograph 3 eine Kommunikationseinheit 39 auf, mittels der er über den Kommunikationskanal 193 auf das GNSS-Modul 11 und das DSRC-Modul 12 des Mehrzweckmodul 1 zugreift. Ein GNSS-Modul und ein DSRC-Modul sind in digitalen Tachographen 3 der Fig. 2 nicht vorhanden.

Das Telematikgerät 4 weist eine Kommunikationseinheit 49 zum Zugriff auf von dem Mehrzweckmodul 1 zur Verfügung gestellte Funktionen über den Kommunikationskanal 194 auf. Weiterhin weist es einen Mikrocomputer 45 auf, auf dem seine Telematikfunktionen ausgeführt werden. Ein RAM-Speicher 451, ein Flash Speicher 452, eine Sicherheitseinheit 46, eine Energieversorgung 47, eine Schnittstelle 48 und eine HMI-Nutzerschnittstelle 453 sind ebenfalls vorhanden. Entsprechendes gilt für das Navigationsgerät 5, das E-Call-Modul 6 und das elektronisches Logbuch 7. Auch ein Navigationsgerät 5' ist dargestellt, welches keine Sicherheitseinheit aufweist, sonst aber im Wesentlichen denselben Aufbau hat wie das Navigationsgerät 5. Es steht über einen ungesicherten Kommunikationskanal 195' mit dem Mehrzweckmodul 1 in Verbindung, und erhält von diesem Positionsinformationen, die nicht authentifiziert und/oder nicht verschlüsselt sind. Es braucht daher keine entsprechende Entschlüsselungs- und/oder Authentifizierungs-Funktionalität aufzuweisen, und kann dennoch von den vom Mehrzweckmodul 1 bereitgestellten Navigationsinformationen profitieren.

Nach derzeitigem Stand gibt es in Fahrzeugen eine Vielzahl von elektronischen Geräten, wie zum Beispiel die Mauterfassungseinheit 2, einen Tachographen 3, Telematikgeräte 4, ein Navigationsgerät 5, ein E-Call-Modul 6 Spracherkennungsgeräte und vieles mehr. Diese Geräte benötigen für ihre Bestimmungserfüllung mindestens ein oder mehrere der Funktionsblöcke GNSS-Modul 11, DSRC-Modul 12, GSM/xG-Modul 13, WiFi-Modul 14 und Antennen 111, 121, 131, 141, 112, 122, 132, 142 für die Positionsbestimmung und für die Nah- und/oder Fernkommunikation.

Bisher werden diese Funktionsblöcke und Antennen für Kommunikation und Positionierung in jedem einzelnen Gerät separat integriert und befinden sich somit mehrfach innerhalb der Fahrzeugarchitektur. Als Beispiel seien hier das GNSS-Modul 21, 31 mit Antennen 211, 212, 311, 312 und das GSM/xG-Modul 23 mit Antennen 231, 232 der Fig. 1 genannt. Diese Funktionsmodule und Antennen werden sowohl von der Mauterfassungseinheit 2 als auch von dem Navigationsgerät 5, dem E-Call-Modul 6, dem Telematikgerät 4, von Spracherkennungseinheiten und weiteren Einheiten separat integriert und liegen somit mehrfach im Fahrzeug vor was zu erhöhten Gesamtkosten und zu einem erhöhten Platzbedarf führt. Desweiteren kann die räumlich nahe Platzierung der vielen Sende- und Empfangsantennen gegenseitige Störungen verursachen und die Insassen unnötig mit Funkstrahlen belasten.

Ziel der vorliegenden Erfindung ist es, eine verbesserte Systemarchitektur bereitzustellen, die die unnötige Mehrfachintegration von identischen Funktionsblöcken für die Kommunikation und Positionierung vermeidet und dadurch die Gesamtkosten sowie die Entwicklungs- und Testzeit erheblich reduziert.

Desweiteren trägt die neue Architektur zur Reduzierung der Funkstrahlenbelastung der Fahrzeuginsassen bei. Die Grundidee der neuen Architektur basiert darauf, die identischen Funktionsblöcke/Module und Antennen für die Kommunikation und/oder Positionierung aus den verschiedenen Geräten zu extrahieren und in ein eigenständiges Mehrzweckmodul 1 zu integrieren. Als eine bevorzugte Einsatzvariante für die neue Systemarchitektur mit Mehrzweckmodul 1 sei hier beispielhaft der zukünftige digitale Tachograph 3 und die Mauterfassungseinheit 2 genannt. Die neue Tachographen Verordnung sieht vor, dass zukünftige Tachographen 3 mit GNSS-Funktionalität für die Positionsbestimmung und DSRC-Funktionalität für Kontrollzwecke erweitert werden.

Diese Anforderung kann auf herkömmliche Weise beispielsweise dadurch erfüllt werden, dass ein GNSS-Modul 31 und/oder ein DSRC-Modul 32 in den digitalen Tachographen 3 integriert werden. In diesem Fall würde das GNSS-Modul 31 mit Antennen 311, 312 zum wiederholten Mal und das DSRC-Modul 32 mit Antenne 321 zum mindesten zweiten Mal in die Fahrzeugarchitektur integriert werden. Es ist allgemein bekannt, dass die meisten tachographenpflichtigen Nutzfahrzeuge, solche ab 3,5 Tonnen, in Europa heute mindestens ein oder mehrere Mauterfassungseinheiten 2 eingebaut haben, die bereits ein GNSS-Modul 21 und/oder ein DSRC-Modul 22 enthalten, um an den unterschiedlichen nationalen (Deutschland, Schweiz, Österreich, Slowakei, Belgien, und anderen) und internationalen automatischen Mautsystemen teilnehmen zu können. Als Internationales automatisches Mautsystem sei hier der europäische elektronische Mautdienst EETS genannt, was für "European Electronic Toll Service" steht.

Die Erfüllung dieser neuen gesetzlichen Anforderungen bezüglich der Integration von GNSS-Funktionalität und DSRC-Funktionalität wird mit Hilfe des erfindungsgemäßen Mehrzweckmoduls 1 besonders vorteilhaft realisiert. Fig. 1 zeigt die typischen Funktionsblöcke einer Mauterfassungseinheit 2 die EETS-fähig ist und des zukünftigen Tachographen 3, auch "Smart TCO" genannt, mit den neuen Funktionsblöcken für GNSS-Funktionalität und DSRC-Funktionalität. Es ist leicht ersichtlich, dass diese Funktionsblöcke in beiden Geräten enthalten sind.

Fig. 2 zeigt eine bevorzugte Variante einer auf einem Mehrzweckmodul 1 basierenden Systemarchitektur. Die Grundidee ist die mehrfach benötigten Funktionsblöcke für die Nah- und Fernkommunikation und für die Positionierung aus den einzelnen Fahrzeuggeräten zu extrahieren und in ein separates Mehrzweckmodul 1 zu integrieren. In dieser bevorzugten Variante beinhaltet das Mehrzweckmodul 1 das GNSS-Modul 11 für die Positionsbestimmung, das DSRC-Modul 12 für die Kontrolle mittels Kurzstreckenfunk und ein GSM/xG-Modul 13 für die Fernkommunikation mit einem Hintergrundsystem wie es bei Mautsystemen der Fall ist.

Neben dem GNSS-Modul 11, dem GSM/xG-Modul 13 und dem DSRC-Modul 12 verfügt das Mehrzweckmodul 1 über einen Mikrocomputer 15, der unter anderem für die Kommunikation mit den einzelnen Fahrzeuggeräten und für die Steuerung des Zugriffs auf das Positionierungs- und Kommunikationsmodul zuständig ist, dem GNSS-Modul 11 und dem DSRC-Modul 12 bzw. dem GSM/xG-Modul 13. Die Kommunikation zwischen dem Mehrzweckmodul 1 und den einzelnen Fahrzeuggeräten 2 - 7 erfolgt entweder drahtlos, zum Beispiel über Bluetooth, und/oder drahtgebunden, zum Beispiel über einen CAN-Bus. Desweiteren verfügt das Mehrzweckmodul 1 über die Sicherheitseinheit 16, die mit Hilfe kryptologischer Mittel, wie beispielsweise Verschlüsselung und/oder Signatur, die Integrität, Authentizität und Vertraulichkeit der Datenkommunikation zwischen dem Mehrzweckmodul 1 und den einzelnen Fahrzeuggeräten 2 - 7 sicherstellt. Zusätzlich beinhaltet das Mehrzweckmodul 1 eine oder mehrere Antennen 111, 112, 121, 131, 132, 141, 142 für das jeweilige Kommunikationsmodul, wobei die Antennen sowohl intern, das heißt innerhalb des Mehrzweckmoduls 1, oder extern, also außerhalb vom Mehrzweckmodul 1, angeordnet sein können.

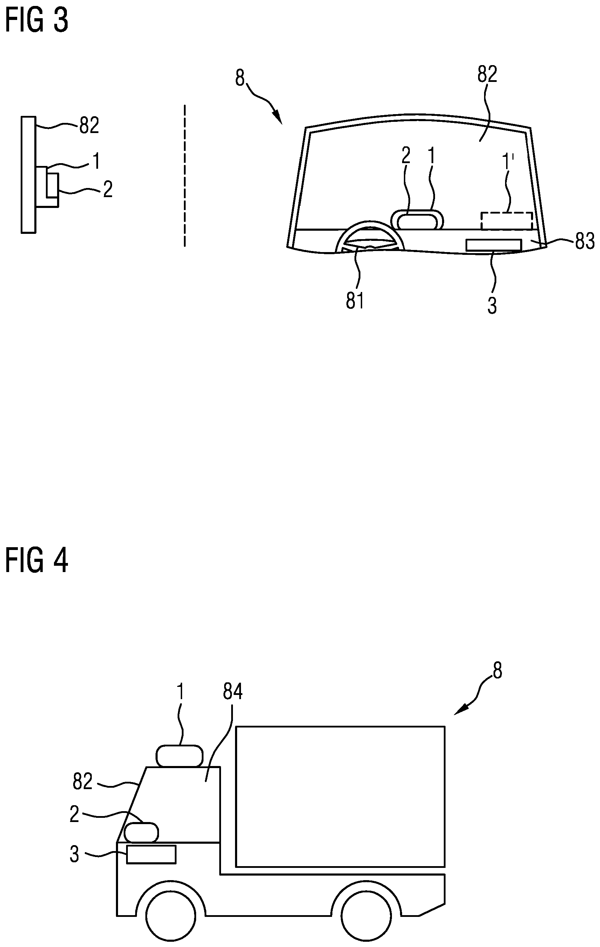

Fig. 3 zeigt eine Anordnung eines erfindungsgemäßen Mehrzweckmoduls 1 in einem Fahrzeug 8. Man erkennt das Lenkrad 81, die Windschutzscheibe 82 und den Instrumententräger 83. Das Mehrzweckmodul 1 ist mittig auf dem Instrumententräger 83 angeordnet, so dass es durch die Windschutzscheibe 82 eine gute Sende- und Empfangsposition für GNSS Funktionalität, DSRC-Funktionalität und GSM/xG-Funktionalität hat. Alternativ ist ein Mehrzweckmodul 1' eingezeichnet, welches bei einer metallbeschichteten Windschutzscheibe 82 in einem beschichtungsfreien Teil der Windschutzscheibe 82 angeordnet ist. Die Mauterfassungseinheit 2 ist an dem Mehrzweckmodul 1 angeordnet, der digitale Tachograph 3 im unteren rechten Bereich des Instrumententrägers 83. Im linken Teil der Abbildung sieht man die Windschutzscheibe 82 im Schnitt, an der das Mehrzweckmodul 1 angeordnet ist. Es weist einen L-förmigen Querschnitt auf, in dem die Mauterfassungseinheit 2 angeordnet ist. Gemäß diesem Ausführungsbeispiel ist das Mehrzweckmodul 1 so gestaltet, dass es als Halterung für ein anderes Gerät, hier für die Mauterfassungseinheit 2, dient. Das Mehrzweckmodul 1 ist entweder - wie gezeigt - an der Windschutzscheibe 82 oder auf dem Instrumententräger 83 oder - wie hier nicht gezeigt - an einem anderen Platz innerhalb der Fahrzeugkabine befestigt, wo die Sende- und Empfangsverhältnisse günstig sind. In einer weiteren bevorzugten Umsetzungsvariante beinhaltet das Mehrzweckmodul 1 als Sensor 10 einen Bewegungserkennungssensor mit dem Zweck, den Bewegungs- und Stillstandszustand des Fahrzeugs 8 zu detektieren und die anderen interessierten Fahrzeuggeräte über den Bewegungszustand des Fahrzeugs zu informieren und/oder interessierte Geräte bei einer Bewegung aus dem Schlafmodus aufzuwecken.

In einer weiteren bevorzugten Umsetzungsvariante beinhaltet das Mehrzweckmodul 1 als zusätzliche Sensoren 10 beispielsweise einen Beschleunigungssensor, oft auch als Accelerometer bezeichnet, und/oder einen Drehratensensor, oft auch als Gyroskop bezeichnet, und/oder einen Magnetfeldsensor und/oder einen elektrischen Kompass, einen Höhenmesser und/oder weitere Sensoren. Deren Messwerte werden mit den Informationen vom GNSS-Modul 11 und mit dem Tachosignal fusioniert, und stellen somit eine Quelle für sehr präzise, ausfallsichere und vertrauenswürdige Positions-, Richtungs- und Geschwindigkeitsdaten dar sowie für andere Zustandsdaten des Kraftfahrzeugs 1 und/oder dessen Umgebung. In einer weiteren Umsetzungsvariante ist das Mehrzweckmodul 1 über die Schnittstelle 18 an den Fahrzeugbus, beispielsweise den CAN-Bus, angeschlossen und stellt somit eine zentrale Quelle für hochpräzise, sichere und vertrauenswürdige Positions-, Richtungs- und Geschwindigkeitsdaten dar.

Fig. 4 zeigt das Fahrzeug 8 in schematische Darstellung. Das Mehrzweckmodul 1 ist außen, am oberen Ende der Fahrerkabine 84 angeordnet. Seine Sende- und Empfangseigenschaften werden somit nicht durch die eventuell metallbeschichtete Windschutzscheibe 82 beeinträchtigt. Die Mauterfassungseinheit 2 ist im Inneren der Fahrerkabine 84 angeordnet, ebenso der digitale Tachograph 3. Das Mehrzweckmodul 1 ist hier auf dem Dach angeordnet dargestellt, es kann aber auch an einer anderen außerhalb der Fahrzeugkabine 84 befindlichen Stelle vorteilhaft angeordnet sein, beispielsweise in den Seitenspiegel integriert oder an diesen angeordnet.

Mit anderen Worten stellt die Erfindung eine neuartige Systemarchitektur bereit, deren Grundidee es ist, identische Funktionsmodule und Antennen, die heute noch in verschiedenen Fahrzeuggeräten integriert sind, zu extrahieren und in ein separates Mehrzweckmodul 1 zu integrieren. Durch die Integration der von mehreren Geräten 2 - 7 benötigten identischen Funktionsblöcke und Antennen und Sensoren in ein zentrales Mehrzweckmodul 1, wird die heute übliche Mehrfachintegration vermieden und die Ressourcen können optimal genutzt werden.

Die meisten dieser Kommunikationsmodule 2 - 7 werden während dem Betrieb nur selten benötigt. Das DSRC-Modul 22 der Mauterfassungseinheit 2 beispielsweise wird nur während der Durchfahrt an einer DSRC-Brücke, einer Mautbrücke, benötigt. Die Anzahl der Mautbrücken sind sehr begrenzt und über das gesamte Straßennetz verteilt. So kann es vorkommen, dass ein Fahrzeug 8 über mehrere Tage hinweg an keiner DSRC-Brücke, auch DSRC-Baken-Anlage genannt, vorbeifährt und es zu keiner einzigen DSRC-Transaktion kommt. Die DSRC-Transaktionshäufigkeit für die zukünftigen Digitalen Tachographen 3 wird sich voraussichtlich auf demselben niedrigen Niveau bewegen, wie bei den heutigen Mauterfassungseinheiten 2.

Ähnlich verhält es sich mit dem GSM/xG-Modul. Dieses wird von der Mauterfassungseinheit 2 nur selten und nur für kurze Zeit über den Tag verteilt gebraucht, um Daten in bestimmten Zeitabständen an das Hintergrundsystem zu senden oder zu empfangen. Die meiste Zeit jedoch ist das GSM/xG-Modul 23 inaktiv und die freien Kapazitäten des GSM GMX Moduls 23 können von anderen Geräten, die das gleiche Funktionsmodul ebenfalls nur selten und nur für kurze Zeit benötigen genutzt werden. Die zentrale GNSS Funktion lässt sich noch einfacher mehrfach nutzen, indem die von den zentralen GNSS-Modul 11 im Mehrzweckmodul 1 berechneten Positionsdaten an alle interessierten und berechtigten Fahrzeuggeräte gleichzeitig via Rundfunkverfahren, auch Broadcast genannt, verteilt werden.

Der große Vorteil der hier vorgestellten Systemarchitektur ist die Vermeidung der Mehrfachintegration von kostenintensiven Funktionsmodulen 21, 22, 23, 31, 32 und deren Antennen 211, 221, 212, 231, 232, 311, 321, 312. Durch die Extraktion der nur zeitweise benötigten Funktionsmodule und Antennen aus den einzelnen Fahrzeuggeräten 2 - 7 werden Kosten, Komplexität und Installationsaufwand der einzelnen Geräte 2 - 7 stark reduziert. Je mehr Geräte 2 - 7 das Mehrzweckmodul 1 gemeinsam nutzen, umso stärker reduzieren sich die Kosten und der Installationsaufwand, beispielsweise für die Antenneninstallation, im Gesamtsystem.

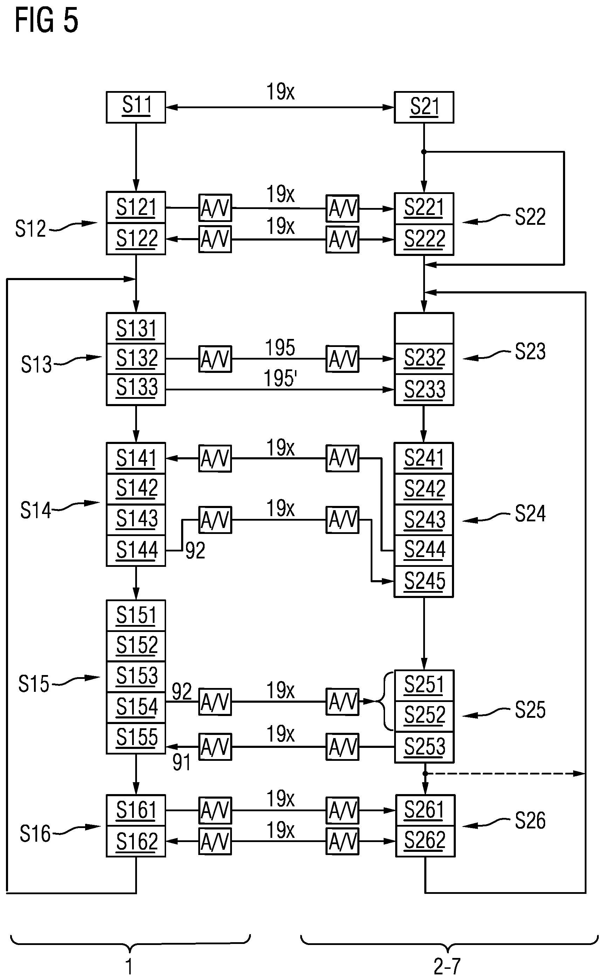

Fig. 5 zeigt ein Flussdiagram eines erfindungsgemäßen Verfahrens. Auf der linken Seite ist der Ablauf im Mehrzweckmodul 1 angegeben, auf der rechten Seite der Ablauf in einem der Geräte Mauterfassungseinheit 2, digitale Tachograph 3, Telematikgerät 4, Navigationsgerät 5, E-Call-Modul 6 und elektronisches Logbuch 7. Im Folgenden wird hier jeweils auf die Mauterfassungseinheit 2 als Gerät 2 Bezug genommen, alle anderen sind entsprechend gemeint.

Im Schritt S11 wird ein Kommunikationskanal 19x zwischen Mehrzweckmodul 1 und Gerät 2 aufgebaut. Im Gerät 2 entspricht dies dem Schritt S21. Dies ist durch einen Doppelpfeil mit Angabe des Kommunikationskanals 19x angedeutet. Im anschließenden Schritt S12 wird die Priorität einzelner Geräte 2-7 festgelegt. Dies erfolgt entweder über eine Zuweisung im Schritt S121, oder wird zwischen Mehrzweckmodul 1 im Schritt S122 und Gerät 2 im Schritt S222 ausgehandelt. Die Zuweisung ist über einen von links nach rechts gerichteten Pfeil mit der Angabe des Kanals 19x angedeutet, das Aushandeln über einen entsprechenden Doppelpfeil. In den Pfeilen befindet sich jeweils ein mit A/V bezeichneter Block auf jeder Seite, in dem eine eventuelle Authentifizierung und/oder Verschlüsselung und/oder Signierung beziehungsweise Entschlüsselung abläuft. Dies ist nicht in allen Schritten erforderlich, wird hier und im folgenden Text aber fakultativ angegeben.

Im Schritt S13 werden Positionsinformationen ausgesendet, im Schritt S14 werden Daten auf Anfrage ausgesendet, im Schritt S15 werden Daten anlassbezogen ausgesendet und im Schritt S16 werden Geräteprioritäten aktualisiert. Nach Schritt S16 wird wieder zu Schritt S13 verzweigt. Entsprechende Schritte laufen im Gerät 2 ab: Im Schritt S22 wird die Priorität des Geräts entweder empfangen, Schritt S221, oder ausgehandelt, Schritt S222. Der Schritt S22 kann auch ganz entfallen, dann kennt das Geräte 2 seine Prioritäten nicht, wird aber vom Mehrzweckmodul 1 entsprechend seiner Priorität angesprochen. Im Schritt S23 werden Positionsinformationen empfangen, im Schritt S24 werden Daten angefordert und empfangen, im Schritt S25 werden anlassbezogene Daten empfangen und im Schritt S26 wird die Gerätepriorität aktualisiert. Dieser letzte Schritt kann fakultativ entfallen, dann wird statt nach Schritt S26 bereits nach Schritt S25 zum Schritt S23 verzweigt.

Das Aussenden von Positionsinformationen im Schritt S13, oder auch ein entsprechendes Aussenden anderer regelmäßig wiederkehrender Daten, meist gemäß Ausführungsbeispiel folgende Zwischenschritte auf: im Schritt S131 wird die Verfügbarkeit eines Datenkanals gemäß der für das Gerät festgelegten Priorität geprüft. Bei Verfügbarkeit werden im Schritt S132 die entsprechenden Positionsinformationen verschlüsselt gesendet. Im Schritt S133 werden unverschlüsselte Positionsinformationen versendet. Dies erfolgt über den unverschlüsselten Kommunikationskanal 195'. Auf Geräteseite werden die verschlüsselten und/oder Authentifizierung Daten im Schritt S232 empfangen, die unverschlüsselten im Schritt S233. Im Allgemeinen ist entweder Schritt S232 oder Schritt S233 in einem Gerät implementiert, sie werden hier der Einfachheit halber beide gezeigt.

Schritt S14 weist folgende Zwischenschritte auf: im Schritt S141 wird eine Anfrage des Geräts 2 empfangen. Im Schritt S142 wird die Priorität geprüft. Im Schritt S143 wird die Verfügbarkeit des Datenkanals 19x geprüft. Ist dieser verfügbar, so werden im Schritt S144 Daten 92 über den Datenkanal 19x ausgesendet. Geräteseitig wird im Schritt S241 der Bedarf bestimmter Daten bestimmt, die Priorität im Schritt S242 geprüft und die Verfügbarkeit des Datenkanals 19x im Schritt S243 festgestellt. Ist dieser verfügbar, so werden im Schritt S244 Daten über den Datenkanal 19x angefordert und im Schritt S245 empfangen.

Schritt S15 weist folgende Zwischenschritte auf: im Schritt S151 wird ein Anlass festgestellt. Im Schritt S152 wird die Priorität geprüft, im Schritt S153 die Verfügbarkeit eines Datenkanals gemäß der festgestellten Priorität. Im Schritt S1 54 werden, bei Verfügbarkeit des Datenkanals 19x, Daten 92 über diesen ausgesendet. Im Schritt S155 werden gegebenenfalls vom Gerät 2 ausgesandte Daten 91 empfangen. Geräteseitig wird im Schritt S251 der Kanal 19x auf die Verfügbarkeit von Daten überprüft, ist dieses der Fall werden sie im Schritt S252 empfangen. Gegebenenfalls werden im Schritt S253 Daten als Antwort an das Mehrzweckmodul 1 gesendet.

Im Schritt S16 wird geprüft, ob eine Änderung der Priorität der angeschlossenen Geräte 2 - 7 angebracht ist. Ist dies der Fall, wird entweder im Schritt S161 eine neue Priorität zugewiesen, oder im Schritt S162 eine neue Priorität mit dem Gerät 2 ausgehandelt. Entsprechende Schritte S261 und S262 finden Geräte seitlich statt. Geräte seitlich werden die vom jeweiligen Modul 11, 12, 13 erhaltenen Daten ausgewertet und geeignete Aktionen ausgeführt. Daten und/oder Befehle werden an das jeweilige Modul 11, 12, 13 des Mehrzweckmoduls 1 geleitet. Diese Schritte sind leicht in den oben beschriebenen Ablauf integrierbar, erforderlichenfalls ist der Ablauf entsprechend erweiterbar.

Es versteht sich, dass einzelne Merkmale der oben beschriebenen Ausführungsbeispielen auch abgeändert, weggelassen oder ergänzt werden können oder in einer anderen als der hier beschriebenen Kombination einsetzbar sind, ohne den Bereich der Erfindung zu verlassen.

## Patentansprüche

1. Mehrzweckmodul (1) für ein Kraftfahrzeug (8), aufweisend Funktionsblöcke (11, 12, 13, 14), die zur Funktion mindestens zweier im Kraftfahrzeug (8) einsetzbarer Geräte (2, 3, 4, 5, 6, 7) für deren Bestimmungserfüllung unerlässlich sind, sowie ein Kommunikationsmodul (19) zur Steuerung einer manipulationssicheren Kommunikation zwischen dem Mehrzweckmodul (1) und zumindest einem ersten Gerät (2, 3, 4, 5, 6, 7) der zumindest zwei Geräte (2, 3, 4, 5, 6, 7) zum Aufbau eines Kommunikationskanals (192 - 197) zwischen dem Mehrzweckmodul (1) und den zumindest zwei Geräten (2 - 7), für dessen Funktion zumindest einer der Funktionsblöcke (11, 12, 13, 14) unerlässlich ist, wobei
einer der Funktionsblöcke (11, 12, 13, 14) ein GNSS-Modul (11) oder ein DSRC-Modul (12) oder ein GSM/xG-Modul (13) oder ein WiFi-Modul (14) oder ein Bluetooth-Modul oder eine Antenne (111, 112, 121, 122, 131, 132, 141, 142) für eines dieser Module (11, 12, 13, 14) ist, dass zumindest das erste Gerät eine Mauterfassungseinheit (2) oder ein digitaler Tachograph (3) ist und dass das Kommunikationsmodul (19) ausgebildet ist, mit mehreren der Geräte (2 - 7) gleichzeitig zu kommunizieren und eingehende Datenpakete (91) in Empfang zu nehmen und ausgehende Datenpakete (92) prioritätsgesteuert zu senden, so dass die Datenpakete je nach Priorität versandt werden, oder dass das Kommunikationsmodul (19) ausgebildet ist, mit mehreren der Geräte (2 - 7) gleichzeitig zu kommunizieren und Datenpakete (91, 92) nach festgelegter Priorität der Geräte (2 - 7) zu empfangen und zu senden, wobei das Mehrzweckmodul dazu ausgebildet ist, eine Priorität zu den Geräten (2 - 7) zu ermitteln und/oder zuzuweisen, und das Kommunikationsmodul (19) dazu ausgebildet ist, über einen manipulationsgesicherten Kommunikationskanal (192 - 197) als der Kommunikationskanal mit zumindest einem der Geräte (2 - 7) zu kommunizieren, mit Authentifizierung der Kommunikationspartner (1 - 7) und/oder Verschlüsselung und/oder Signierung der Datenpakete (91, 92), wobei das Kommunikationsmodul (19) dazu ausgebildet ist, zumindest einen weiteren manipulationsungesicherten Kommunikationskanal (195') zwischen dem Mehrzweckmodul (1) und zumindest einem der Geräte (2 - 7) aufzubauen, wobei das Mehrzweckmodul (1) dazu ausgebildet ist, Positionsinformationen des Kraftfahrzeugs (8) zyklisch sowohl manipulationsgesichert als auch manipulationsungesichert, je nach geforderter Sicherheitsanforderung des jeweiligen Gerätes, über den entsprechenden manipulationsgesicherten Kommunikationskanal oder den weiteren manipulationsungesicherten Kommunikationskanal auszusenden.

2. Mehrzweckmodul nach Anspruch 1, **dadurch gekennzeichnet, dass** es dazu ausgebildet ist, Prioritätsänderungen in der Kommunikation abgestimmt vorzunehmen, so dass eines der Geräte (2 - 7), welches nur unter bestimmten Randbedingungen eine hohe Priorität benötigt, diese bei Vorliegen dieser Randbedingungen zugeteilt bekommt, während es ansonsten eine niedrigere Prioritätsstufe zugewiesen bekommt.

3. Verfahren zur Kommunikation eines Mehrzweckmoduls (1) nach einem der Ansprüche 1 bis 2 mit diesem zusammenarbeitenden zumindest zwei Geräten (2 - 7), wobei zumindest das erste Gerät eine Mauterfassungseinheit (2) oder ein digitaler Tachograph (3) ist, aufweisend die Schritte:
- Aufbau eines Kommunikationskanals (192 - 197) zwischen dem Mehrzweckmodul (1) und den Geräten (2 - 7),
- Ermitteln und/oder Zuweisen einer Priorität zu den Geräten (2 - 7),
- regelmäßiges Aussenden von verschlüsselten und/oder unverschlüsselten und/oder signierten und/oder unsignierten Positionsdaten an alle Geräte (2 - 7) über den Kommunikationskanal (192 - 197), mit Authentifizierung der Kommunikationspartner (1 - 7) und/oder Verschlüsselung und/oder Signierung der Datenpakete (91, 92),
- auf Anforderung durch eines der Geräte (2 - 7) Aussenden von Datenpaketen (91) an dieses Gerät (2 - 7) beziehungsweise Empfangen von Datenpaketen (92) von diesem Gerät (2 - 7),
- gleichzeitiges Kommunizieren mit mehreren der Geräte (2 - 7) und in Empfang nehmen eingehender Datenpakete (91), und prioritätsgesteuertes Senden ausgehender Datenpakete (92) durch ein Kommunikationsmodul (19) und Erhalten von Datenpaketen (92) von dem Kommunikationsmodul (19), die je nach ermittelter und/oder zugewiesener Priorität versandt werden; oder
- gleichzeitiges Kommunizieren mit mehreren der Geräte (2 - 7) und Empfangen und Senden der Datenpakete (91, 92) nach festgelegter Priorität der Geräte (2 - 7),
- Kommunizieren über einen manipulationsgesicherten Kommunikationskanal (192 - 197) als der Kommunikationskanal mit zumindest einem der Geräte (2 -7),
- Aufbau zumindest eines weiteren manipulationsungesicherten Kommunikationskanals zwischen dem Mehrzweckmodul (1) und zumindest einem der Geräte (2 - 7)
- und Aussenden von Positionsinformationen des Kraftfahrzeugs (8) zyklisch sowohl manipulationsgesichert als auch manipulationsungesichert, je nach geforderter Sicherheitsanforderung des jeweiligen Gerätes, über den entsprechenden manipulationsgesicherten Kommunikationskanal oder den weiteren manipulationsungesicherten Kommunikationskanal.

## Claims

1. A multi-purpose module (1) for a motor vehicle (8), having function blocks (11, 12, 13, 14) which are indispensable for the function of at least two devices (2, 3, 4, 5, 6, 7) usable in the motor vehicle (8) for fulfilling their intended purpose, and a communication module (19) for controlling tamper-proof communication between the multi-purpose module (1) and at least one first device (2, 3, 4, 5, 6, 7) of the at least two devices (2, 3, 4, 5, 6, 7) for setting up a communication channel (192-197) between the multi-purpose module (1) and the at least two devices (2-7), the operation of which requires at least one of the function blocks (11, 12, 13, 14), wherein
one of the function blocks (11, 12, 13, 14) is a GNSS module (11) or a DSRC module (12) or a GSM/xG module (13) or a WiFi module (14) or a Bluetooth module or an antenna (111, 112, 121, 122, 131, 132, 141, 142) for one of these modules (11, 12, 13, 14), at least the first device is a toll collection unit (2) or a digital tachograph (3) and the communication module (19) is configured to communicate with multiple of the devices (2-7) at the same time and to receive incoming data packets (91) and to send outgoing data packets (92) in a priority-controlled manner, so that the data packets are sent according to priority, or that the communication module (19) is configured to communicate with multiple of the devices (2-7) at the same time and to receive and send data packets (91, 92) according to the stipulated priority of the devices (2-7), wherein the multi-purpose module is configured to ascertain and/or assign a priority to the devices (2-7) and the communication module (19) is configured to communicate with at least one of the devices (2-7) via a tamper-proof communication channel (192-197) as the communication channel, with authentication of the communication partners (1-7) and/or encryption and/or signing of the data packets (91, 92), wherein the communication module (19) is configured to set up at least one further manipulation-proof communication channel (195') between the multi-purpose module (1) and at least one of the devices (2-7), wherein the multi-purpose module (1) is configured to cyclically transmit position information of the motor vehicle (8) in both tamper-proof and tamper-unprotected fashion, depending on the required security requirement of the respective device, via the corresponding tamper-proof communication channel or the further tamper-unprotected communication channel.

2. The multi-purpose module of claim 1, **characterised in that** the module is configured to make priority changes in the communication in a coordinated manner, such that one of the devices (2-7) that requires a high priority only under certain boundary conditions is allocated this priority if these boundary conditions are present, while it is otherwise assigned a lower priority level.

3. A method of communication of a multi-purpose module (1) of any one of claims 1 to 2, having at least two devices (2-7) cooperating with said multi-purpose module, wherein at least the first device is a toll collection unit (2) or a digital tachograph (3), the method having the steps of:
- setting up a communication channel (192-197) between the multi-purpose module (1) and the devices (2-7),
- determining and/or assigning a priority to the devices (2-7),
- regular transmission of encrypted and/or unencrypted and/or signed and/or unsigned position data to all devices (2-+7) via the communication channel (192-197), with authentication of the communication partners (1-7) and/or encryption and/or signing of the data packets (91, 92),
- at the request of one of the devices (2-7), transmitting data packets (91) to said device (2-7) or receiving data packets (92) from this device (2-7),
- simultaneously communicating with multiple of the devices (2-7) and receiving incoming data packets (91), and priority-controlled transmission of outgoing data packets (92) by means of a communication module (19) and receiving data packets (92) from the communication module (19), which are sent on the basis of the ascertained and/or assigned priority; or
- communicating with multiple devices (2- 7) at the same time and receiving and transmitting the data packets (91, 92) according to the set priority of the devices (2-7),
- communicating via a tamper-proof communication channel (192-197) as the communication channel with at least one of the devices (2-7),
- setting up at least one further tamper-unprotected communication channel between the multi-purpose module (1) and at least one of the devices (2-7)
- and transmitting position information of the motor vehicle (8) cyclically in both tamper-proof and tamper-unprotected fashion, depending on the required security requirement of the respective device, via the corresponding tamper-proof communication channel or the further tamper-unprotected communication channel.

## Revendications

1. Module multiusage (1) pour un véhicule automobile (8), présentant des blocs fonctionnels (11, 12, 13, 14) indispensables au fonctionnement d'au moins deux appareils (2, 3, 4, 5, 6, 7) utilisables dans le véhicule automobile (8) pour remplir leur fonction, ainsi qu'un module de communication (19) permettant de contrôler une communication sécurisée contre les manipulations entre le module multiusage (1) et au moins un premier appareil (2, 3, 4, 5, 6, 7) des au moins deux appareils (2, 3, 4, 5, 6, 7) pour établir un canal de communication (192-197) entre le module multiusage (1) et les au moins deux appareils (2-7), pour le fonctionnement duquel au moins un des blocs fonctionnels (11, 12, 13, 14) est indispensable, dans lequel
l'un des blocs fonctionnels (11, 12, 13, 14) est un module GNSS (11) ou un module DSRC (12) ou un module GSM/xG (13) ou un module WiFi (14) ou un module Bluetooth ou une antenne (111, 112, 121, 122, 131, 132, 141, 142) pour l'un de ces modules (11, 12, 13, 14), qu'au moins le premier appareil est une unité de perception de péage (2) ou un tachygraphe numérique (3), et que le module de communication (19) est conçu pour communiquer simultanément avec plusieurs des appareils (2 - 7), et pour recevoir des paquets de données entrants (91) et pour envoyer des paquets de données sortants (92) de manière contrôlée selon la priorité, de sorte que les paquets de données sont envoyés selon la priorité, ou que le module de communication (19) est conçu pour communiquer simultanément avec plusieurs des appareils (2 - 7) et recevoir et envoyer des paquets de données (91, 92) selon une priorité définie des appareils (2 - 7), dans lequel le module multiusage est conçu pour déterminer et/ou attribuer une priorité aux appareils (2 - 7), et le module de communication (19) est conçu pour communiquer avec au moins l'un des appareils (2 - 7) par l'intermédiaire d'un canal de communication qui est un canal de communication sécurisé contre les manipulations (192 - 197), avec authentification des partenaires de communication (1 - 7) et/ou chiffrement et/ou signature des paquets de données (91, 92), dans lequel le module de communication (19) est conçu pour établir au moins un autre canal de communication non sécurisé contre les manipulations (195') entre le module multiusage (1) et au moins l'un des appareils (2 - 7), dans lequel le module multiusage (1) est conçu pour transmettre cycliquement des informations de position du véhicule automobile (8), de manière sécurisée contre les manipulations ou non, selon les exigences de sécurité spécifiques à chaque appareil, par l'intermédiaire du canal de communication sécurisé contre les manipulations correspondant ou de l'autre canal de communication non sécurisé contre les manipulations.

2. Module multiusage selon la revendication 1, **caractérisé en ce qu'**il est conçu pour effectuer des changements de priorité dans la communication de manière coordonnée, de sorte qu'un des appareils (2 - 7) qui ne nécessite une priorité élevée que dans certaines conditions limites se voit attribuer celle-ci lorsque ces conditions limites sont remplies, tandis qu'un niveau de priorité inférieur lui est sinon attribué.

3. Procédé de communication d'un module multiusage (1) selon l'une quelconque des revendications 1 et 2 avec au moins deux appareils (2 - 7) coopérant avec celui-ci, dans lequel au moins le premier appareil est une unité de perception de péage (2) ou un tachygraphe numérique (3), comprenant les étapes suivantes :
- établissement d'un canal de communication (192 - 197) entre le module multiusage (1) et les appareils (2 - 7),
- détermination et/ou attribution d'une priorité aux appareils (2 - 7),
- transmission régulière de données de position chiffrées et/ou non chiffrées et/ou signées et/ou non signées à tous les appareils (2 - 7) par l'intermédiaire du canal de communication (192 - 197), avec authentification des partenaires de communication (1 - 7) et/ou chiffrement et/ou signature des paquets de données (91, 92),
- à la demande de l'un des appareils (2 - 7), transmission de paquets de données (91) à cet appareil (2 - 7) ou réception de paquets de données (92) en provenance de cet appareil (2 - 7),
- communication simultanée avec plusieurs des appareils (2 - 7) et réception de paquets de données entrants (91), et envoi contrôlé selon la priorité de paquets de données sortants (92) par un module de communication (19) et réception de paquets de données (92) du module de communication (19) qui sont envoyés selon la priorité déterminée et/ou attribuée ; ou
- communication simultanée avec plusieurs des appareils (2 - 7), et réception et envoi des paquets de données (91, 92) selon la priorité définie des appareils (2 - 7),
- communication avec au moins l'un des appareils (2 - 7) par l'intermédiaire d'un canal de communication qui est un canal sécurisé contre les manipulations (192 - 197),
- établissement d'au moins un autre canal de communication non sécurisé contre les manipulations entre le module multiusage (1) et au moins l'un des appareils (2 - 7)
- et transmission cyclique des informations de position du véhicule automobile (8), de manière sécurisée contre les manipulations ou non, selon les exigences de sécurité spécifiques à chaque appareil, par l'intermédiaire du canal de communication sécurisé contre les manipulations correspondant ou de l'autre canal de communication non sécurisé contre les manipulations.
